# EUROPEAN PATENT APPLICATION

(11) **EP 2 592 387 A2**
(43) Date of publication of application: **15.05.2013**
(21) Application number: 12185434.3
(22) Date of filing: 21.09.2012
(51) Int. Cl.: G01C 21/36

(54) **Evaluation indication system, evaluation indication method and computer-readable storage medium**

(30) Priority: 11.11.2011 JP 2011247043
(71) Applicant: AISIN AW CO., LTD., Anjo-shi, Aichi 444-1192 (JP)
(72) Inventor: Yamakawa, Junki, Anjo-shi, Aichi 444-1192 (JP); Shimizu, Yasumasa, Anjo-shi, Aichi 444-1192 (JP)
(74) Representative: Kramer - Barske - Schmidtchen

(57) **Abstract**

This invention relates to an evaluation indication system having a map display control unit (21a) that displays a current location of a vehicle and a map around the current location on a display unit, a current efficiency evaluation acquisition unit (21b) that acquires, as a current efficiency evaluation, a result of comparison between a driving efficiency of a unit section in current travel of the vehicle and a target, and a previous efficiency evaluation acquisition unit (21c) that acquires, as a previous efficiency evaluation, a result of comparison between a driving efficiency of the unit section in previous travel previous to the current travel and a target. The map display control unit (21a) indicates the current efficiency evaluation and previous efficiency evaluation together on the map; and when the current efficiency evaluation is improved as compared with the previous efficiency evaluation, the current efficiency evaluation acquisition unit (21b) corrects the target to a higher target.

## Description

### INCORPORATION BY REFERENCE

The disclosure of Japanese Patent Application No. 2011-247043 filed on November 11, 2011 including the specification, drawings and abstract is incorporated herein by reference in its entirety.

### BACKGROUND OF THE INVENTION

The invention relates to an evaluation indication system, evaluation indication method and computer-readable storage medium that indicate an evaluation of driving efficiency of a vehicle.

### Description of the Related Art

In related arts, various techniques for indication for improving the fuel efficiency of a vehicle have been developed. Furthermore, Japanese Patent Application Publication No. 2002-350152 (JP 2002-350152 A) describes a technique for indicating, on a map, an evaluation of current fuel efficiency at a current location of the vehicle and an evaluation (good, intermediate, bad, or the like) of fuel efficiency in previous travel for each point or each route.

### SUMMARY OF THE INVENTION

In the above-described related arts, although evaluating the fuel efficiency of the vehicle is described, an evaluation criterion for making evaluations is not described. Generally, a driving skill varies among drivers of a vehicle. Therefore, for example, even when the fuel efficiency of the vehicle is evaluated using one evaluation criterion, the evaluation result may not serve as an appropriate index to improve the driving skill of each driver. Furthermore, it is conceivable that the driving skill of a driver improves with a lapse of time. Therefore, when the fuel efficiency of a vehicle driven by a specific driver is evaluated using a fixed evaluation criterion, the evaluation result may not serve as an index to improve the driving skill of the specific driver.

The invention provides an evaluation indication system, evaluation indication method and computer-readable storage medium that are able to provide an index to improve the driving skill of a driver and to improve the driving efficiency of a vehicle.

A first aspect of the invention provides an evaluation indication system. The evaluation indication system includes: a map display control unit that displays a current location of a vehicle and a map around the current location on a display unit; a current efficiency evaluation acquisition unit that acquires, as a current efficiency evaluation, a result of comparison between a driving efficiency of a unit section in current travel of the vehicle and a target; and a previous efficiency evaluation acquisition unit that acquires, as a previous efficiency evaluation, a result of comparison between a driving efficiency of the unit section in previous travel previous to the current travel and a target, wherein the map display control unit indicates the current efficiency evaluation and previous efficiency evaluation together on the map, and, when the current efficiency evaluation is improved as compared with the previous efficiency evaluation, the current efficiency evaluation acquisition unit corrects the target to a higher target.

A second aspect of the invention provides an evaluation indication method. The evaluation indication method includes: displaying a current location of a vehicle and a map around the current location on a display unit; acquiring, as a current efficiency evaluation, a result of comparison between a driving efficiency of a unit section in current travel of the vehicle and a target; acquiring, as a previous efficiency evaluation, a result of comparison between a driving efficiency of the unit section in previous travel previous to the current travel and a target; indicating the current efficiency evaluation and previous efficiency evaluation together on the map; and, when the current efficiency evaluation is improved as compared with the previous efficiency evaluation, correcting the target to a higher target.

A third aspect of the invention provides a non-transitory computer-readable storage medium that stores computer-executable instructions for performing an evaluation indication function. The evaluation indication function includes: displaying a current location of a vehicle and a map around the current location on a display unit; acquiring, as a current efficiency evaluation, a result of comparison between a driving efficiency of a unit section in current travel of the vehicle and a target; acquiring, as a previous efficiency evaluation, a result of comparison between a driving efficiency of the unit section in previous travel previous to the current travel and a target; indicating the current efficiency evaluation and previous efficiency evaluation of together on the map; and, when the current efficiency evaluation is improved as compared with the previous efficiency evaluation, correcting the target to a higher target.

According to the above configurations, a target is corrected when it is determined that a driving skill of a driver is improved on the basis of a comparison between a current efficiency evaluation and a previous efficiency evaluation, and thus a driving efficiency is compared with the corrected higher target. As a result, the current efficiency evaluation and the previous efficiency evaluation serve as indices for the driver to improve the driving skill and to improve the driving efficiency of the vehicle, and it is possible to prompt the driver to achieve a higher target as the driving skill improves.

### BRIEF DESCRIPTION OF THE DRAWINGS

The features, advantages, and technical and industrial significance of this invention will be described below with reference to the accompanying drawings, in which like numerals denote like elements, and wherein:
FIG. 1 is a block diagram that shows a navigation terminal that includes an evaluation indication system;
FIG. 2 is a flowchart that shows a driving efficiency acquisition process;
FIG. 3A and FIG. 3B are flowcharts that show a driving efficiency indication process;
FIG. 4 is a flowchart that shows a target correction process;
FIG. 5A is a view that shows an example of a map displayed and FIG. 5B, FIG. 5C, FIG. 5D and FIG. 5E are views that show examples of evaluations by unit sections; and
FIG. 6A and FIG. 6B are views that show examples of evaluations by unit sections.

### DETAILED DESCRIPTION OF THE EMBODIMENTS

Here, an embodiment of the invention will be described in accordance with the following sequence.
(1) Configuration of Navigation Terminal
(2) Driving Efficiency Acquisition Process
(3) Driving Efficiency Indication Process
(4) Target Correction Process
(5) Alternative Embodiments

### (1) Configuration of Navigation Terminal

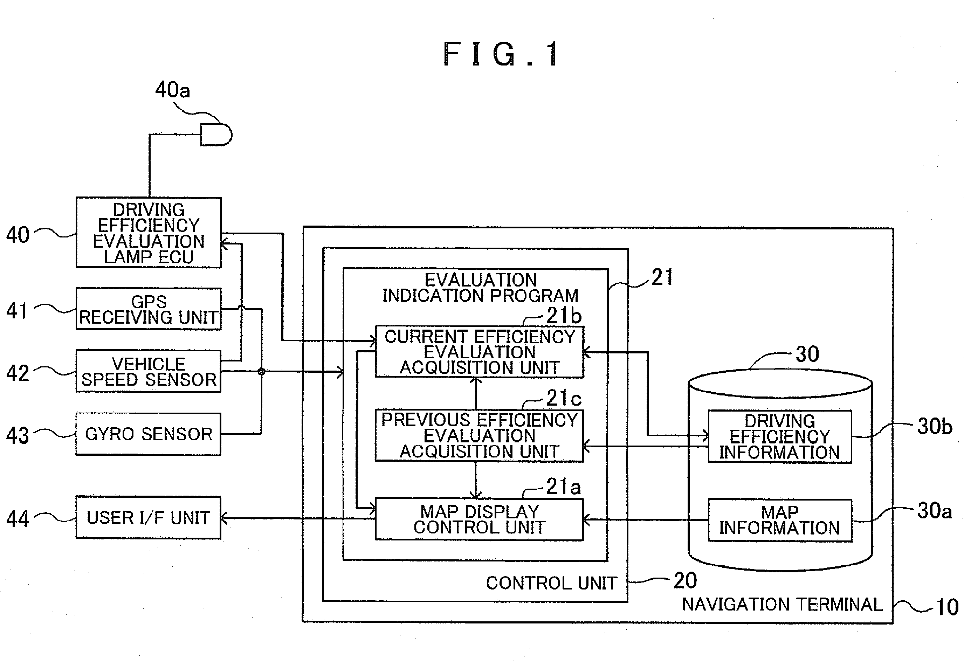

FIG. 1 is a block diagram that shows the configuration of an evaluation indication system mounted on a vehicle. In the present embodiment, the evaluation indication system is implemented by a navigation terminal 10. The navigation terminal 10 includes a control unit 20 having a CPU, a RAM, a ROM, and the like. The control unit 20 executes programs stored in the ROM. In the present embodiment, the control unit 20 executes a navigation program that is one of programs stored in the ROM. The navigation program is a program that causes the control unit 20 to execute the function of displaying a map, including a current location of the vehicle, on a display unit of the navigation terminal 10 and guiding a driver to a destination. The navigation program includes an evaluation indication program 21 that causes the control unit 20 to implement the function of indicating current efficiency evaluations and previous efficiency evaluations together on the display unit.

The vehicle according to the present embodiment includes a driving efficiency evaluation lamp ECU 40, a GPS receiving unit 41, a vehicle speed sensor 42, a gyro sensor 43 and a user I/F unit 44. The GPS receiving unit 41 receives electric waves from GPS satellites and through an interface (not shown), outputs a signal for calculating a current location of the vehicle. The control unit 20 acquires the signal output from the GPS receiving unit 41 to acquire the current location of the vehicle. The vehicle speed sensor 42 outputs signals corresponding to the rotation speeds of wheels equipped for the vehicle. Via an interface (not shown), the control unit 20 acquires the signals output from the vehicle speed sensor 42 to acquire a vehicle speed. The gyro sensor 43 detects an angular acceleration of a turn of the vehicle in a horizontal plane and outputs a signal corresponding to the direction of the vehicle. The control unit 20 acquires the signal output from the gyro sensor 43 to acquire the travelling direction of the vehicle. The vehicle speed sensor 42, the gyro sensor 43, and the like, are utilized to, for example, correct the current location of the vehicle, determined on the basis of the signal output from the GPS receiving unit 41. In addition, the current location of the vehicle is corrected on the basis of a travel track of the vehicle.

The driving efficiency evaluation lamp ECU 40 includes a control circuit that is used to evaluate the driving efficiency of the travelling vehicle on the basis of the operation of the vehicle. A lamp 40a is provided in an instrumental panel of the vehicle, and is connected to the driving efficiency evaluation lamp ECU 40. In the present embodiment, the driving efficiency evaluation lamp ECU 40 determines whether a combination of pieces of information coincides with a condition in which fuel consumption is suppressed. The combination of the pieces of information correspond to a combination of information that indicates fuel consumption (for example, information identified from a signal for operating an injector, information indicated by a fuel comsumption sensor, and the like), information output from the vehicle speed sensor 42 and information that indicates the state of a transmission. That is, in the present embodiment, the driving efficiency evaluation lamp ECU 40 is configured such that a state where fuel consumption is suppressed (state where the fuel efficiency is good) is determined as a state where the driving efficiency is good. Note that various conditions may be defined as the condition in which fuel consumption is suppressed. In the present embodiment, when the consumption amount of fuel is smaller than or equal to a predetermined amount, the vehicle speed is higher than or equal to a predetermined threshold and the state of the transmission is a normal state (the transmission operates in a drive mode, for example, in which the state of transmission is not a state for acceleration at high efficiency such as in a sporty mode, or the like) the driving efficiency evaluation lamp ECU 40 determines that the combination of the pieces of information coincides with the condition in which fuel consumption is suppressed.

Then, the driving efficiency evaluation lamp ECU 40 turns on the lamp 40a when the combination of the pieces of information coincides with the condition in which fuel consumption is suppressed. As a result, when the lamp 40a is turned on, it is possible to determine that the driver is driving such that fuel consumption is suppressed; whereas, when the lamp 40a is turned off, it is possible to determine that the driver is driving such that fuel is excessively consumed. In addition, when the driving efficiency evaluation lamp ECU 40 turns on the lamp 40a, the driving efficiency evaluation lamp ECU 40 outputs lamp turn-on information, indicating that the lamp 40a is turned on, to the control unit 20. Thus, the control unit 20 is able to determine whether the lamp 40a is turned on or turned off on the basis of the lamp turn-on information.

The user I/F unit 44 is an interface unit that is used to input a driver's command and provide various pieces of information to the driver. The user I/F unit 44 includes a display unit formed of a touch panel display (not shown), an input unit such as a switch, and a voice output unit such as a speaker. The user I/F unit 44 receives a control signal from the control unit 20 and displays an image for providing various guides on the touch panel display.

Map information 30a is stored in a storage medium 30. The map information 30a includes node data, shape interpolation point data, link data, and the like. The node data indicate the positions, or the like, of nodes corresponding to end points of roads on which the vehicle travels. The shape interpolation point data indicate the positions, or the like, of shape interpolation points for determining the shape of a road between the nodes. The link data indicate links between the nodes. In addition, in the present embodiment, driving efficiency information 30b is stored in the storage medium 30 each time the vehicle travels. The driving efficiency information 30b indicates evaluations of driving efficiency of the vehicle. The driving efficiency information 30b is information that indicates a rate at which the above-described lamp 40a has been turned on in an intended evaluation section. When the driving efficiency information 30b is stored at the time when the vehicle is travelling toward a set destination, information that indicates the destination and a departure place is stored in association with the driving efficiency information 30b. The intended evaluation section is a section within a unit section, and is a section of which driving efficiency is evaluated.

The control unit 20 executes the evaluation indication program 21 to cause the display unit of the user I/F unit 44 to display a map together with current efficiency evaluations and previous efficiency evaluations. In order to execute the above process, the evaluation indication program 21 includes a map display control unit 21 a, a current efficiency evaluation acquisition unit 21b and a previous efficiency evaluation acquisition unit 21c.

The map display control unit 21a is a program module that causes the control unit 20 to implement the function of displaying a current location of the vehicle and a map around the current location on the display unit of the user I/F unit 44 and indicating current efficiency evaluations and previous efficiency evaluations together by unit sections on the map. The control unit 20 determines the current location of the vehicle on the basis of the signals output from the GPS receiving unit 41, the vehicle speed sensor 42 and the gyro sensor 43, determines the display range of the map around the current location of the vehicle, and extracts information about roads, facilities, and the like, in the display range from the map information 30a. Then, the control unit 20 outputs, to the display unit of the user I/F unit 44, a control signal for drawing the map that indicates the current location of the vehicle and roads, facilities, and the like, around the current location. As a result, the display unit of the user I/F unit 44 displays the map that indicates the roads, facilities, and the like, around the current location of the vehicle together with the current location of the vehicle.

The current efficiency evaluation acquisition unit 21b is a program module that causes the control unit 20 to implement the function of acquiring, as a current efficiency evaluation, a result of comparison between a target (for example, target driving efficiency) and a driving efficiency for each unit section (in the present embodiment, a section of a set distance (for example, 100 m)) in current travel of the vehicle and, when the current efficiency evaluation is improved as compared with the previous efficiency evaluation, correcting the target to a higher target (for example, correcting a target driving efficiency to a higher driving efficiency). Through the current efficiency evaluation acquisition unit 21b, the control unit 20 executes driving efficiency information acquisition process (described later) while the vehicle is travelling, acquires the turn-on rate of the lamp 40a in each unit section, and stores the turn-on rate in each unit section as the driving efficiency information 30b. Current efficiency evaluations and previous efficiency evaluations are generated on the basis of the pieces of driving efficiency information 30b.

In the present embodiment, when the driver sets a destination by operating the user I/F unit 44, the function of the navigation program sets the current location of the vehicle, at the time of setting the destination, as a departure place, searches for a route from the departure place to the destination, and guides the vehicle. Then, when the vehicle is travelling from the departure place to the destination, travel from the departure place to the destination at present is regarded as current travel. That is, a current travel section that is a section in which the vehicle has currently travelled is a section from the departure place as a start point to the current location as an end point. A total distance of the current travel section increases as the vehicle travels until the vehicle reaches the destination. When the vehicle has travelled and reached the set destination, the control unit 20 stores, as the driving efficiency information 30b, the turn-on rate of the lamp 40a in each of the unit sections from the departure place to the destination in association with the departure place and the destination.

Then, the control unit 20 compares a target with the driving efficiency in current travel, indicated by the driving efficiency information 30b, and acquires the result of comparison as the current efficiency evaluation through the process executed by the current efficiency evaluation acquisition unit 21b. Therefore, the control unit 20 acquires the driving efficiency information 30b for each unit section in the current travel section after the vehicle starts travelling at the departure place until the vehicle reaches the destination. Then, the control unit 20 compares the turn-on rate of the lamp 40a (the rate of distance travelled in a state where the lamp 40a is turned on) in each unit section, indicated by the driving efficiency information 30b, with a predetermined threshold as the target. Then, the control unit 20 determines that the current efficiency evaluation is "good" when the turn-on rate of the lamp 40a in each unit section is higher than or equal to the predetermined threshold, and determines that the current efficiency evaluation is "bad" when the turn-on rate is lower than the predetermined threshold.

The previous efficiency evaluation acquisition unit 21c is a program module that causes the control unit 20 to implement the function of acquiring, as a previous efficiency evaluation, a result of comparison between a target and a driving efficiency in each unit section in previous travel previous to the current travel. In the present embodiment, the control unit 20 sets previous travel from the same departure place to the same destination as the current travel as travel for which previous efficiency evaluations are indicated. Then, the control unit 20 compares the target with the previous efficiency indicated by the driving efficiency information 30b and acquires the results of comparison as the previous efficiency evaluation.

Therefore, the control unit 20 acquires the driving efficiency information 30b, indicating the turn-on rate of the lamp 40a with which the same departure place and destination as those of the above-described current travel are associated, from the storage medium 30. When the storage medium 30 stores a plurality of pieces of the evaluation information 30b with which the same departure place and destination as those of the current travel are associated, the driving efficiency information 30b having the highest turn-on rate of the lamp 40a (that is, the driving efficiency information 30b that indicates the highest driving efficiency in the past) may be, for example, acquired. Then, the control unit 20 compares the turn-on rate of the lamp 40a with the predetermined threshold, determines that the previous efficiency evaluation is "good" when the turn-on rate of the lamp 40a is higher than or equal to the predetermined threshold, and determines that the previous efficiency evaluation is "bad" when the turn-on rate is lower than the predetermined threshold. In order to determine whether the departure place and the destination are the same between current travel and previous travel, a predetermined margin is set for the position of each point and then, for example, when the distance between two points is shorter than or equal to 300 m, the two points may be regarded as the same point.

When the current efficiency evaluations and the previous efficiency evaluations are acquired as described above, the control unit 20 outputs, to the display unit of the user I/F unit 44, a control signal for drawing the current efficiency evaluations and the previous efficiency evaluations on the map, through the process executed by the map display control unit 21 a. In order to indicate the current efficiency evaluations and the previous efficiency evaluations, the control unit 20 extracts the current travel section and a section travelled in previous travel (previous travel section) from the map currently displayed on the display unit of the user I/F unit 44. Then, the control unit 20 determines current efficiency evaluations by unit sections in the current travel section and previous efficiency evaluations by unit sections in the previous travel section, and outputs, to the display unit of the user I/F unit 44, a control signal for drawing the current efficiency evaluations and the previous efficiency evaluations on the map. As a result, the display unit of the user I/F unit 44 indicates the current efficiency evaluations and the previous efficiency evaluations by unit sections.

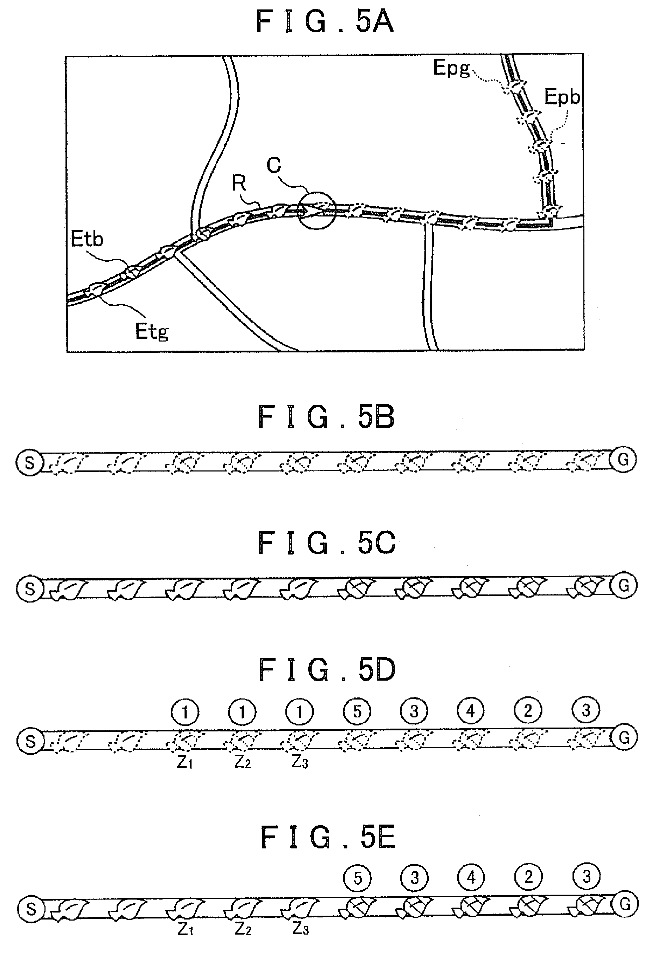

FIG. 5A shows an example of a map displayed on the display unit. In this example, an icon C that indicates the current location of the vehicle is shown on a road R indicated by the solid curve. In addition, in the example shown in FIG. 5A, icons that are shaped like a leaf are used to indicate driving efficiency evaluations on the road. A solid-line icon Etg indicates a "good" current efficiency evaluation, a solid-line hatched icon Etb indicates a "bad" current efficiency evaluation, a broken-line icon Epg indicates a "good" previous efficiency evaluation and a broken-line hatched icon Epb indicates a "bad" previous efficiency evaluation.

As described above, according to the present embodiment, the current efficiency evaluations and the previous efficiency evaluations are indicated on the map displayed on the display unit of the user I/F unit 44 such that the driver is able to visually recognize the current efficiency evaluations and the previous efficiency evaluations at the same time. As a result, the driver is able to drive while easily comparing the current efficiency evaluations with the previous efficiency evaluations. In addition, as in the case of the example shown in FIG. 5A, by indicating the current efficiency evaluations and the previous efficiency evaluations on the map in different modes (solid line and broken line), the driver is able to clearly distinguish the current efficiency evaluations and the previous efficiency evaluations from each other without any confusion.

Here, the current efficiency evaluations and the previous efficiency evaluations are indicated by unit sections. In addition, in current travel and in previous travel, the vehicle usually travels a plurality of unit sections. Therefore, current efficiency evaluations and previous efficiency evaluations in a plurality of successive unit sections are indicated on the map. Thus, the driver is able to drive while contrasting the current efficiency evaluations with the previous efficiency evaluations over the plurality of unit sections.

In the present embodiment, after current travel ends (after the vehicle has reached the destination), the control unit 20 determines whether to correct the target. In the present embodiment, the turn-on rate of the lamp 40a, indicating the driving efficiency, is compared with the predetermined threshold as the target. By so doing, the driving efficiency in each unit section is evaluated. Before the target is corrected by the current efficiency evaluation acquisition unit 21b, a target is set to a predetermined default threshold, and then the driving efficiency is evaluated.

On the other hand, when the current efficiency evaluations in current travel are improved as compared with the previous efficiency evaluations in previous travel at the time when the vehicle has reached the destination, the target in the next travel is corrected to a higher target. In addition, when the current efficiency evaluations in current travel are deteriorated as compared with the previous efficiency evaluations in previous travel, the target in the next travel is corrected to a lower target. In the present embodiment, the control unit 20 corrects the target such that the target becomes higher as a degree of improvement, to which the current efficiency evaluations are improved with respect to the previous efficiency evaluations, increases, and corrects the target such that the target becomes lower as the degree of deterioration, to which the current efficiency evaluations are deteriorated with respect to previous efficiency evaluations, increases. With this configuration, the target becomes higher as the driving skill in current travel relative to the driving skill in the previous travel is higher, and the target becomes lower as the driving skill in current travel relative to the driving skill in the previous travel is lower. Thus, it is possible to correct the target so that the target matches with a driver's driving skill.

Specifically, in the present embodiment, the control unit 20 identifies the number of evaluation-improved unit sections (unit sections of which evaluations are improved) and the number of evaluation-deteriorated unit sections (unit sections of which evaluations are deteriorated) through the process executed by the current efficiency evaluation acquisition unit 21b. The evaluation-improved unit section is a unit section in which a target is not achieved in previous travel and the target is achieved in current travel. The evaluation-deteriorated unit section is a unit section in which a target is achieved in previous travel and the target is not achieved in current travel. In the present embodiment, the control unit 20 determines that a degree (degree of improvement), to which current efficiency evaluations related to current travel are improved with respect to previous efficiency evaluations related to previous travel, is larger as the difference between the number of evaluation-improved unit sections and the number of evaluation-deteriorated unit sections increases when the number of evaluation-improved unit sections is larger than the number of evaluation-deteriorated unit sections. In addition, the control unit 20 acquires the degree of improvement as follows. A difference value is obtained by subtracting the number of evaluation-deteriorated unit sections from the number of evaluation-improved unit sections. Then the difference value is divided by the number of unit sections in which the target has not been achieved in previous travel. The control unit 20 acquires thus normalized difference value as the degree of improvement.

Then, the control unit 20 corrects a target such that the correction amount of the target increases as the degree of improvement increases. In the present embodiment, the correction amount of the target corresponding to the degree of improvement is determined in advance as shown in Table 1. The control unit 20 specifies the correction amount of the target in accordance with Table 1.

**Table 1**

| | | | | |
|---|---|---|---|---|
| Degree of Improvement | ±1 to 25% | ±26 to 50% | ±51 to 75% | ±76 to 100% |
| Correction Amount | ±5% | ±10% | ±15% | ±20% |

Note that, in Table 1, the degree of improvement is indicated by rounded percentage, and the correction amount is also indicated by percentage. When the degree of improvement is a negative value, the correction amount is also a negative value. Here, the negative degree of improvement means the degree of deterioration. As shown in Table 1, in the present embodiment, the correction amount for setting the target to a higher target increases as the degree of improvement increases, and the correction amount for setting the target to a lower target increases as the degree of deterioration increases. Such correction of the target is reflected on a target in the next travel. Therefore, when current efficiency evaluations are indicated on the display unit in the next travel, the current efficiency evaluations function as indices for the driver to improve the driving skill to improve the driving efficiency of the vehicle. Thus, it is possible to prompt the driver to achieve a higher target as the driving skill improves.

Note that, in the present embodiment, the degree of improvement varies on the basis of a value obtained by subtracting the number of evaluation-deteriorated unit sections from the number of evaluation-improved unit sections. That is, when the number of evaluation-deteriorated unit sections is constant, the degree of improvement increases as the number of evaluation-improved unit sections increases. Thus, in the present embodiment, it is determined that the degree of improvement is larger with an increase in the number of evaluation-improved unit sections.

FIG. 5B shows an example in which previous efficiency evaluations in previous travel from a departure place S to a destination G are indicated. FIG. 5B shows an example in which, among previous efficiency evaluations in ten unit sections, eight previous efficiency evaluations are "bad" and two previous efficiency evaluations are "good". On the other hand, FIG. 5C shows an example in which current efficiency evaluations in current travel from the same departure place S to the same destination G as those of FIG. 5B are indicated. FIG. 5C shows an example in which, among current efficiency evaluations in ten unit sections, five current efficiency evaluations are "bad", five current efficiency evaluations are "good" and evaluations are improved in three unit sections among the eight unit sections in which the previous efficiency evaluation is "bad".

In the case of these examples, because the number of evaluation-improved unit sections is three and the number of evaluation-deteriorated unit sections is zero, a value obtained by subtracting the number of evaluation-deteriorated unit sections from the number of evaluation-improved unit sections is three. Then, the number of unit sections in which the target is not achieved in previous travel is eight, so the degree of improvement is 3/8 and the rounded percentage is 38%. Thus, the control unit 20 sets the correction amount to 10% on the basis of Table 1. A corrected target just needs to be reflected on a target used to acquire current efficiency evaluations by comparing driving efficiencies with the corrected target in the next travel. A target used to acquire previous efficiency evaluations may be corrected or a non-corrected target may be used.

### (2) Driving Efficiency Acquisition Process

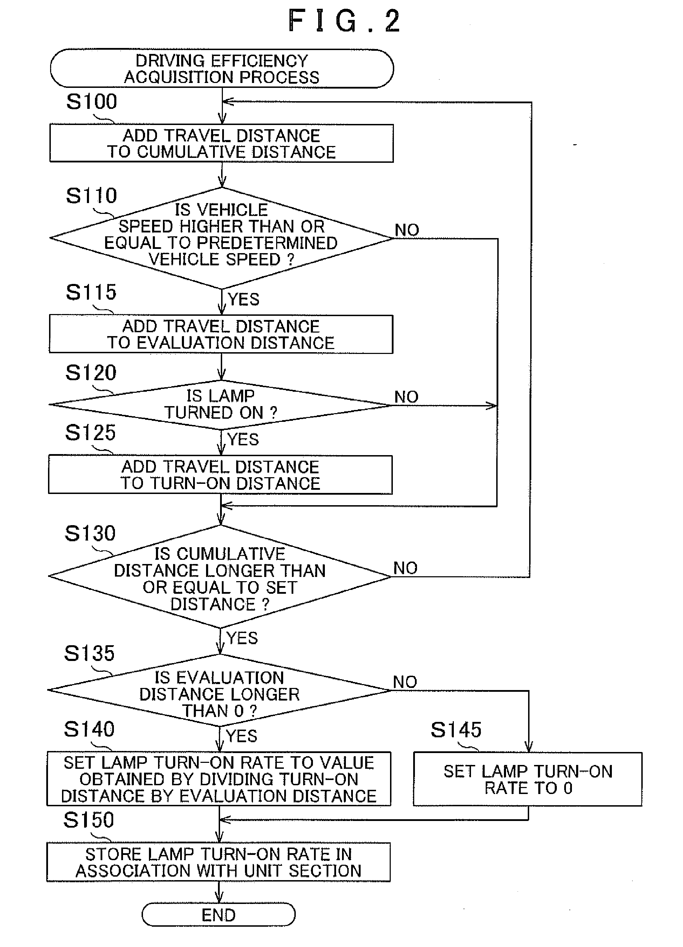

Next, the driving efficiency acquisition process will be described in detail. FIG. 2 is a flowchart of the driving efficiency acquisition process. In the present embodiment, the control unit 20 executes the driving efficiency acquisition process through the process executed by the current efficiency evaluation acquisition unit 21b after the vehicle starts travelling toward a set destination. Before the driving efficiency acquisition process is executed, the control unit 20 initializes a variable that indicates a cumulative distance for determining whether the vehicle has travelled a set distance defined as the length of a unit section, a variable that indicates an evaluation distance within each unit section for determining a distance in which an evaluation of driving efficiency is allowed and a variable that indicates a turn-on distance for determining a distance that the vehicle has travelled in a state where the lamp 40a is turned on.

The control unit 20 adds a travel distance to the cumulative distance (step S100). In the present embodiment, steps S100 to S130 form a loop process, and the process of step S100 is executed at a set interval (for example, 100 ms) when the loop process is repeated. Then, the control unit 20 determines a travel distance ΔL that the vehicle has travelled during a period from when step S100 is previously executed to when step S100 is currently executed on the basis of the signals output from the GPS receiving unit 41, the vehicle speed sensor 42 and the gyro sensor 43, and adds the travel distance ΔL to the cumulative distance. That is, the control unit 20 executes adding process such that a value that indicates a total distance that the vehicle has travelled during a period in which steps S100 to S130 are repeated becomes the cumulative distance.

Subsequently, the control unit 20 determines whether the vehicle speed is higher than or equal to a predetermined vehicle speed (step S110), and, when it is not determined that the vehicle speed is higher than or equal to the predetermined vehicle speed, skips steps S115 to S125. On the other hand, in step S110, when it is determined that the vehicle speed is higher than or equal to the predetermined vehicle speed, the control unit 20 adds the travel distance to the evaluation distance (step S 115). That is, the above-described travel distance ΔL added to the cumulative distance in step S100 is added to the evaluation distance.

Here, the predetermined vehicle speed that is a determination condition used in determination of step S 110 just needs to be defined in advance as a vehicle speed (for example, 4 km/h) below which a significant evaluation of driving efficiency cannot be performed. That is, when the vehicle speed is excessively low, it is difficult to distinguish driving operation for suppressing fuel consumption and driving operation for excessively consuming fuel from each other, so the driving efficiency is not evaluated in the case where the vehicle speed is lower than the predetermined vehicle speed. Thus, in the present embodiment, when the vehicle speed is lower than the predetermined vehicle speed, it is considered that a significant evaluation of driving efficiency cannot be performed and then step S 115 is not executed; whereas, when the vehicle speed is higher than or equal to the predetermined vehicle speed, it is considered that a significant evaluation of driving efficiency can be performed and then the evaluation distance is increased by the travel distance ΔL in step S115. Note that the predetermined vehicle speed may be equal to a predetermined threshold of vehicle speed, set as one of conditions used when the driving efficiency evaluation lamp ECU 40 turns on the lamp 40a.

Furthermore, the control unit 20 determines whether the lamp 40a is turned on (step S120), and, when it is not determined that the lamp 40a is turned on, skips step S125. On the other hand, in step S120, when it is determined that the lamp 40a is turned on, the control unit 20 adds the travel distance to the turn-on distance (step S125). That is, when a significant evaluation of driving efficiency can be performed and the lamp 40a is turned on, the control unit 20 adds the above-described travel distance ΔL, added to the cumulative distance in step S100, to the turn-on distance.

Subsequently, the control unit 20 determines whether the cumulative distance is longer than or equal to a set distance (step S130), and repeats the processes of step S100 and the following steps until it is determined in step S130 that the cumulative distance is longer than or equal to the set distance. That is, when the cumulative distance is longer than or equal to the set distance that is defined in advance as the distance of the unit section, the control unit 20 determines that the vehicle has travelled the unit section and exits from the loop process of steps S100 to S130.

When it is determined in step S130 that the cumulative distance is longer than or equal to the set distance, the control unit 20 determines whether the evaluation distance is longer than 0 (step S135). That is, it is determined whether there is a section in which a significant evaluation can be performed during the travel of the vehicle in unit section. When it is determined in step S 135 that the evaluation distance is longer than 0, the control unit 20 sets the turn-on rate of the lamp 40a to a value obtained by dividing the turn-on distance by the evaluation distance (step S 140). On the other hand, when it is not determined in step S135 that the evaluation distance is longer than 0, the control unit 20 sets the turn-on rate of the lamp 40a to 0 (step S 145). That is, when the evaluation distance (denominator for evaluating the turn-on rate) is not 0, the turn-on rate is calculated on the basis of the turn-on distance and the evaluation distance; whereas, when the evaluation distance is 0, the turn-on rate cannot be calculated because of the definition of the turn-on rate, so the turn-on rate is set to 0. The turn-on rate in the case where the evaluation distance is 0 may be set to be unevaluable, for example.

Subsequently, the control unit 20 stores the turn-on rate of the lamp 40a, set in step S140 or S145, in the storage medium 30 as the driving efficiency information 30b in association with the unit section (step S150). According to the above process, it is possible to store the driving efficiency information 30b for each unit section in the storage medium 30. When the driving efficiency acquisition process is executed in a state where the destination of the vehicle is set, the control unit 20 stores information that indicates the destination and the departure place in association with the driving efficiency information 30b in step S150.

### (3) Driving Efficiency Indication Process

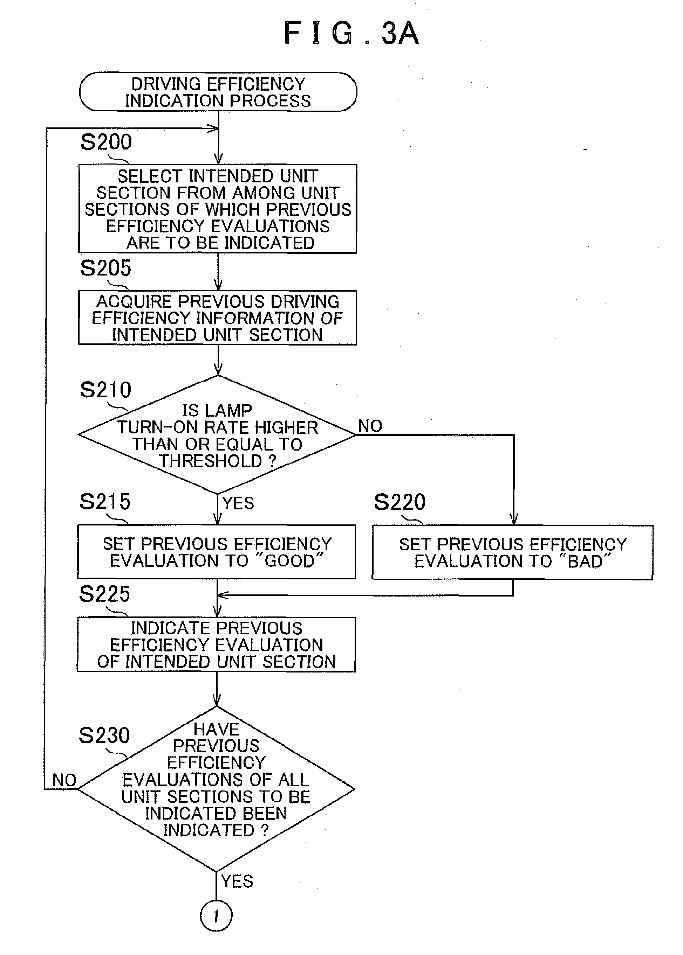

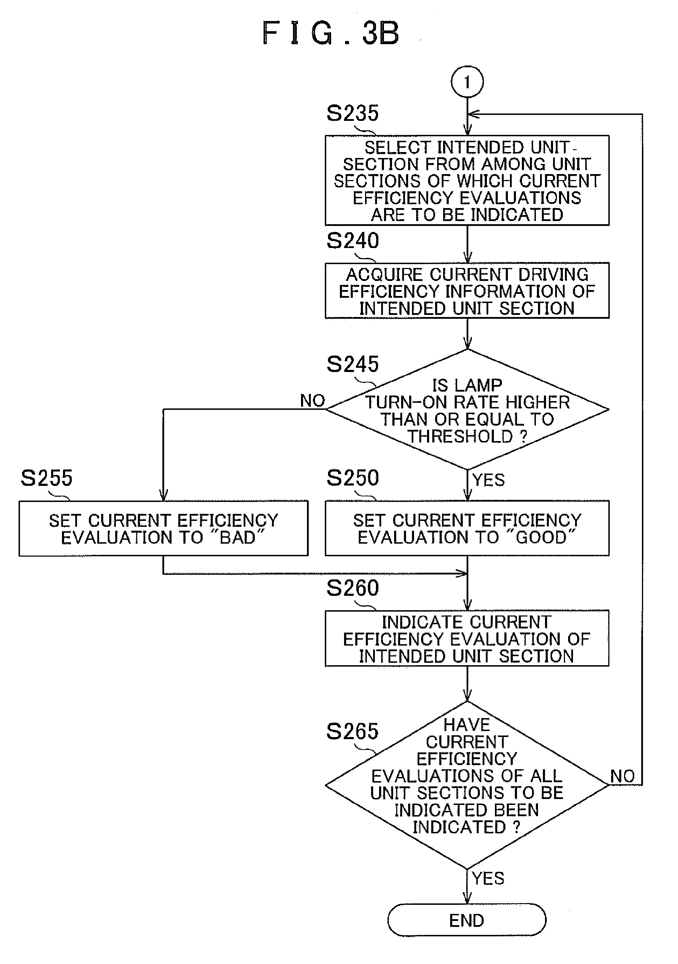

Next, the driving efficiency indication process will be described in detail. FIG. 3A and FIG. 3B are flowcharts of the driving efficiency indication process. In the present embodiment, the driving efficiency indication process is executed when a destination is set by the driver and there is the driving efficiency information 30b for previous travel of which the departure place and destination are the same as the departure place and destination of current travel. In addition, the control unit 20 updates map display on the display unit of the user I/F unit 44 at predetermined intervals. Each time the map display is updated, the driving efficiency indication process is executed.

Steps S200 to S230 shown in FIG. 3A form a loop process for indicating previous efficiency evaluations on the map. The control unit 20 initially selects an intended unit section from among unit sections of which previous efficiency evaluations are to be indicated through the processes executed by the map display control unit 21a and the previous efficiency evaluation acquisition unit 21c (step S200). Through the process executed by the map display control unit 21 a, the control unit 20 determines the range of the map displayed on the display unit of the user I/F unit 44. Furthermore, through the process executed by the previous efficiency evaluation acquisition unit 21 c, the control unit 20 extracts the driving efficiency information 30b having the best driving efficiency (the driving efficiency information 30b of which the turn-on rate of the lamp 40a is the largest) from among the pieces of driving efficiency information 30b associated with the same departure place and destination as the departure place and destination of the current travel. Furthermore, through the process executed by the map display control unit 21 a, the control unit 20 determines, as the unit sections to be displayed, unit sections included in the range of the map displayed on the display unit of the user I/F unit 44, from among the unit sections associated with the extracted pieces of driving efficiency information 30b. Then, from among the unit sections to be displayed, any one of the unit sections for which the process of indicating a previous efficiency evaluation is not executed is selected as an intended unit section.

Subsequently, the control unit 20 acquires the previous driving efficiency of the intended unit section through the process executed by the previous efficiency evaluation acquisition unit 21c (step S205). That is, the control unit 20 acquires the turn-on rate of the lamp 40a in the intended unit section in the previous travel. Subsequently, through the process executed by the previous efficiency evaluation acquisition unit 21c, the control unit 20 determines whether the turn-on rate of the lamp 40a in the intended unit section in the previous travel is higher than or equal to the predetermined rate (step S210). When it is determined in step S210 that the turn-on rate of the lamp 40a is higher than or equal to the predetermined rate, the control unit 20 sets the previous efficiency evaluation of the intended unit section to "good" through the process executed by the previous efficiency evaluation acquisition unit 21 (step S215). On the other hand, when it is not determined in step S210 that the turn-on rate of the lamp 40a is higher than or equal to the predetermined rate, the control unit 20 sets the previous efficiency evaluation of the intended unit section to "bad" through the process executed by the previous efficiency evaluation acquisition unit 21c (step S220). Note that the predetermined rate to be compared with the turn-on rate of the lamp 40a in previous travel may be a threshold that has been the target at the time of the previous travel or may be a corrected threshold when a target is corrected after the previous travel ends.

Subsequently, the control unit 20 indicates the previous efficiency evaluation of the intended unit section through the process executed by the map display control unit 21a (step S225). That is, the control unit 20 outputs, to the display unit of the user I/F unit 44, a signal for drawing an icon, corresponding to the previous efficiency evaluation of the intended unit section. As a result, the display unit of the user I/F unit 44 displays the icon corresponding to the previous efficiency evaluation of the intended unit section.

Subsequently, through the process executed by the map display control unit 2 1 a, the control unit 20 determines whether the previous efficiency evaluations of all the unit sections to be displayed have been indicated (step S230). That is, the control unit 20 determines whether the previous efficiency evaluations have been indicated for all the unit sections to be displayed, determined in step S200. In step S230, when it is not determined that the previous efficiency evaluations of all the unit sections to be displayed have been indicated, the processes of step S200 and the following steps are repeated. On the other hand, when it is determined in step S230 that the previous efficiency evaluations of all the unit sections to be displayed have been indicated, the process for indicating current efficiency evaluations is executed in step S235 and the following steps. At the time when the previous efficiency evaluations of all the unit sections to be displayed have been indicated, the solid-line icons Etg and Etb (icons that indicate current efficiency evaluations) shown in FIG. 5A have not been displayed yet, and only the broken-line icons Epg and Epb (icons that indicate the previous efficiency evaluations) have been displayed. When the route is the same between the current travel and the previous travel, previous efficiency evaluations are indicated in the unit sections behind the current location of the vehicle; however, when current efficiency evaluations are indicated in the unit sections in which the previous efficiency evaluations have been indicated, the current efficiency evaluations are preferentially indicated through the processes in step S235 and the following steps.

Steps S235 to S265 shown in FIG. 3B form a loop process for indicating current efficiency evaluations on the map. Through the processes executed by the map display control unit 21a and the current efficiency evaluation acquisition unit 21b, the control unit 20 initially selects an intended unit section from among unit sections of which current efficiency evaluations are to be indicated (step S235). Through the process executed by the map display control unit 21 a, the control unit 20 determines the range of the map displayed on the display unit of the user I/F unit 44. Furthermore, through the process executed by the current efficiency evaluation acquisition unit 21b, the control unit 20 determines, as the unit sections to be displayed, the unit sections included in the range of the map displayed on the display unit of the user I/F unit 44, from among the unit sections associated with the pieces of driving efficiency information 30b stored in the storage medium 30 during the current travel. Then, from among the unit sections to be displayed, any one of the unit sections for which the process of indicating a current efficiency evaluation is not executed is selected as an intended unit section.

Subsequently, the control unit 20 acquires a current driving efficiency of the intended unit section through the process executed by the current efficiency evaluation acquisition unit 21b (step S240). That is, the control unit 20 acquires the turn-on rate of the lamp 40a in the intended unit section in the current travel. Subsequently, the control unit 20 determines whether the turn-on rate of the lamp 40a in the intended unit section in the current travel is higher than or equal to the predetermined threshold as the target through the process executed by the current efficiency evaluation acquisition unit 21b (step S245). When it is determined in step S245 that the turn-on rate of the lamp 40a is higher than or equal to the predetermined threshold, the control unit 20 sets the current efficiency evaluation of the intended unit section to "good" through the process executed by the current efficiency evaluation acquisition unit 21b (step S250). On the other hand, when it is not determined in step S245 that the turn-on rate of the lamp 40a is higher than or equal to the predetermined threshold, the control unit 20 sets the current efficiency evaluation of the intended section to "bad" through the process executed by the current efficiency evaluation acquisition unit 21b (step S255). Note that the predetermined rate to be compared with the turn-on rate of the lamp 40a in current travel is constant from start of the current travel to the end of the current travel; however, when current efficiency evaluations are improved as compared with previous efficiency evaluations, the predetermined threshold is corrected after the vehicle has reached the destination.

Subsequently, the control unit 20 indicates the current efficiency evaluation of the intended unit section through the process executed by the map display control unit 21a (step S260). That is, the control unit 20 outputs, to the display unit of the user I/F unit 44, a signal for drawing an icon, corresponding to the current efficiency evaluation of the intended unit section. As a result, the display unit of the user I/F unit 44 displays the icon corresponding to the current efficiency evaluation of the intended unit section.

Subsequently, through the process executed by the map display control unit 21a, the control unit 20 determines whether the current efficiency evaluations of all the unit sections to be indicated have been indicated (step S265). That is, the control unit 20 determines whether the current efficiency evaluations of all the unit sections to be indicated, determined in step S235, have been indicated. When it is not determined in step S265 that the current efficiency evaluations of all the unit sections to be indicated have been indicated, the processes of step S235 and the following steps are repeated. On the other hand, when it is determined in step S265 that the current efficiency evaluations of all the unit sections to be indicated have been indicated, the control unit 20 ends the driving efficiency indication process. In the present embodiment, when the current efficiency evaluation is indicated in the unit section in which the previous efficiency evaluation has been indicated, the current efficiency evaluation is preferentially indicated. Therefore, when the current efficiency evaluations of all the unit sections to be indicated have been indicated, the icons Etg and Etb of the current efficiency evaluations are displayed by the solid line in sections in which the vehicle has travelled before the current location of the vehicle, as in the case of the example shown in FIG. 5A. In addition, in the processes of steps S235 to S265, no current efficiency evaluations are indicated in sections ahead of the current location of the vehicle. Therefore, the icons Epg and Epb of the previous efficiency evaluations are indicated by the broken line in the sections ahead of the current location of the vehicle.

### (4) Target Correction Process

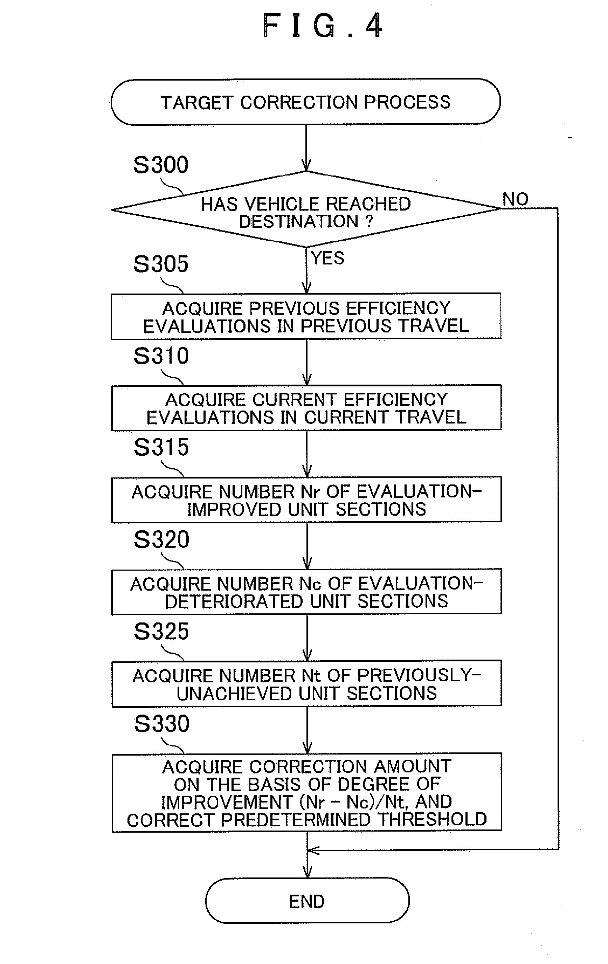

Next, the target correction process will be described in detail. FIG. 4 is a flowchart of the target correction process. In the present embodiment, through the process executed by the current efficiency evaluation acquisition unit 21b, the control unit 20 executes the target correction process at a set interval (for example, 100 ms) when a destination is set by the driver and there is the driving efficiency information 30b for previous travel of which the departure place and destination are the same as the departure place and destination of current travel.

In the target correction process, the control unit 20 determines whether the vehicle has reached the destination (step S300). That is, the control unit 20 determines the current location of the vehicle on the basis of the information output from the GPS receiving unit 41, the vehicle speed sensor 42 and the gyro sensor 43, and determines whether the current location of the vehicle falls within a predetermined distance from the destination set by the driver.

In step S300, when it is not determined that the vehicle has reached the destination, the control unit 20 skips steps S305 to S330 and then ends the target correction process. On the other hand, when it is determined in step S300 that the vehicle has reached the destination, the control unit 20 acquires the previous efficiency evaluations in previous travel (step S305). That is, the control unit 20 acquires the previous efficiency evaluations set in steps S200 to S230 shown in FIG. 3A. For example, in the example shown in FIG. 5B, the previous efficiency evaluation ("good" or "bad") in each of the unit sections from the departure place to the destination is acquired.

Subsequently, the control unit 20 acquires the current efficiency evaluations in current travel (step S310). That is, the control unit 20 acquires the current efficiency evaluations set in steps S235 to S265 shown in FIG. 3B. For example, in the example shown in FIG. 5C, the current efficiency evaluation ("good" or "bad") in each of the unit sections from the departure place to the destination is acquired.

Subsequently, the control unit 20 acquires the number Nr of evaluation-improved unit sections (step S315). That is, the control unit 20 compares the previous efficiency evaluation with the current efficiency evaluation in any one of the unit sections, and, when the previous efficiency evaluation of the unit section is "bad" and the current efficiency evaluation of the unit section is "good", determines that the evaluation is improved. Then, when the evaluation of the unit section is improved, the control unit 20 increases the number Nr of the evaluation-improved unit sections by one. The control unit 20 executes such a process for all the unit sections travelled in current travel and previous travel, and acquires the number Nr of the evaluation-improved unit sections. For example, in the examples shown in FIG. 5B and FIG. 5C, the hatched icon indicates a "bad" evaluation, and the icon with no hatching indicates a "good" evaluation. Thus, in the example shown in FIG. 5B, the number of unit sections of which the previous efficiency evaluation is "bad" is eight. In the example shown in FIG. 5C, the number of unit sections, among these eight unit sections, of which the current efficiency evaluation is "good" is three. Thus, the number Nr of the evaluation-improved unit sections is three.

Subsequently, the control unit 20 acquires the number Nc of the evaluation-deteriorated unit sections (step S320). That is, the control unit 20 compares the previous efficiency evaluation with the current efficiency evaluation in any one of the unit sections, and, when the previous efficiency evaluation of the unit section is "good" and the current efficiency evaluation of the unit section is "bad", determines that the evaluation is deteriorated. Then, when the evaluation of the unit section is deteriorated, the control unit 20 increases the number Nc of the evaluation-deteriorated unit sections by one. The control unit 20 executes such a process for all the unit sections travelled in current travel and previous travel, and acquires the number Nc of the evaluation-deteriorated unit sections. In the example shown in FIG. 5B, the number of unit sections of which the previous efficiency evaluation is "good" is two. Between these two unit sections, there is no unit section of which the current efficiency evaluation is "bad" in the example shown in FIG. 5C. Thus, the number Nc of the evaluation-deteriorated unit sections is zero.

Subsequently, the control unit 20 acquires the number Nt of previously-unachieved unit sections in which the target is not achieved in previous travel (step S325). That is, the control unit 20 consults a previous efficiency evaluation in any one of the unit sections, and, when the previous efficiency evaluation of the unit section is "bad", increases the number Nt of the previously-unachieved unit section by one. The control unit 20 executes such a process for all the unit sections travelled in current travel and previous travel, and acquires the number Nt of the previously-unachieved unit sections. In the example shown in FIG. 5B, the number Nt of the previously-unachieved unit sections is eight.

Then, the control unit 20 sets the degree of improvement to (Nr - Nc) /Nt, acquires the corresponding correction amount, and corrects the predetermined threshold with the correction amount (step S330). That is, the control unit 20 determines the correction amount corresponding to the degree of improvement on the basis of Table 1, and corrects the predetermined threshold with the correction amount. In the examples shown in FIG. 5B and FIG. 5C, the numbers Nr, Nc and Nt of the unit sections are respectively three, zero and eight, so the degree of improvement is 3/8 (38%). Thus, the correction amount is 10% on the basis of Table 1. Therefore, for example, when a pre-corrected target is a threshold that indicates that the lamp 40a is turned on at a rate of 50%, a corrected target is a threshold that indicates that the lamp 40a is turned on at a rate of 55%.

### (5) Alternative Embodiments

The above-described embodiment is just an example for carrying out the aspect of the invention. As long as the target is corrected to a higher target when a current efficiency evaluation is improved as compared with a previous efficiency evaluation, various other embodiments may be employed. For example, the current efficiency evaluations and the previous efficiency evaluations may be acquired from a device not equipped for the vehicle, such as an information management center. The navigation terminal 10 may be fixedly mounted on the vehicle or the portable navigation terminal 10 may be carried into the vehicle and utilized.

The above-described vehicle is a vehicle driven by an internal combustion engine; however, the vehicle is not limited to such a vehicle. In a hybrid vehicle or an electric vehicle, current efficiency evaluations and previous efficiency evaluations may be displayed on a map.

A driving efficiency may be evaluated on the basis of a condition of a combination of a plurality of elements or may be evaluated on the basis of a condition of one element (for example, a value of fuel efficiency). In addition, in a hybrid vehicle that is driven with the use of liquid fuel and a battery, it may be determined that the driving efficiency is good in the case where the vehicle is travelling with the use of only a power source of which a unit price for travelling the same distance is cheaper.

A departure place and a destination are not always determined at the time when the driver explicitly specifies a destination as in the case of the above-described configuration. A departure place and a destination may be determined in various modes. For example, a point at which it is determined that the vehicle has started off and a point at which it is determined that the vehicle has arrived may be respectively set as a departure place and a destination, on the basis of the operating state of the vehicle. Furthermore, a current destination may be, for example, estimated on the basis of a current travel route, a previous travel history, and the like.

Other than travel from a departure place to a destination is set as current travel, current travel may be defined in various modes. That is, the starting point of a current travel section is not specifically limited; when the vehicle has travelled continuously to the current location, the starting point of the continuous travel may be set as the starting point of the current travel section, and, when the vehicle has travelled discontinuously at different travel dates, or the like, a point at which the vehicle is present before the current location may be set as the starting point of a section. That is, a current travel section just needs to be defined so that current travel and previous travel may be distinguished from and contrasted with each other.

A unit section may be a section for leading to the conclusion of an evaluation regarding the driving efficiency. A section determined in accordance with a predetermined rule may be set as a unit section, for example, or a section having a set distance is set as a unit section. For example, one link that has, as end points of the link, the closest nodes indicated by the map information may be set as one unit section. A unit section of which a current efficiency evaluation is to be indicated and a unit section of which a previous efficiency evaluation is to be indicated may coincide with each other or may be different from each other. That is, unit sections just need to be determined in accordance with a common rule, and unit sections to be displayed may be selected where appropriate.

Various modes for indicating current efficiency evaluations and previous efficiency evaluations together may be employed. Current efficiency evaluations and previous efficiency evaluations just need to be indicated so as to be recognized by the driver at the same time. Thus, in one mode, information that directly indicates a current efficiency evaluation and a previous efficiency evaluation may be indicated. In another mode, information that directly indicates one of a current efficiency evaluation and a previous efficiency evaluation and information that indirectly indicates the other may be indicated. As for the latter one, for example, one of a current efficiency evaluation and a previous efficiency evaluation is indicated and information that indicates a relative relationship between the one and the other (such as information that indicates that the other has a better evaluation than the one, the other has a worse evaluation than the one, or the other has an equal evaluation to the one) is indicated.

A current efficiency evaluation just needs to be acquired for each unit section at least in a section displayed on the map within a current travel section. In addition, previous efficiency evaluations just need to be acquired for a section for which previous efficiency evaluations are to be indicated on the map. In this case, within a previous travel section displayed on the map, a section in which previous efficiency evaluations should be contrasted with current efficiency evaluations may be set as a section for which previous efficiency evaluations are to be displayed. Here, sections for which previous efficiency evaluations are to be indicated may be all or part of the sections having information about a previous efficiency evaluation. That is, a previous driving efficiency may be regularly determined and may be stored in the storage medium, and previous efficiency evaluations of all the unit sections, of which previous driving efficiencies are stored in the storage medium and which are present on roads included in the map, may be indicated. Alternatively, previous efficiency evaluations in a section to be displayed, selected from among unit sections of which previous driving efficiencies are stored in the storage medium, may be determined and indicated.

When a section to be displayed is selected from among unit sections of which previous driving efficiencies are stored in the storage medium, previous efficiency evaluations for the respective unit sections in previous travel in which the vehicle has travelled a section including the current location may be acquired. That is, previous efficiency evaluations are acquired by setting a section that includes the current location as a section for which the previous efficiency evaluations are to be indicated. With this configuration, in a state where current efficiency evaluations behind the current location are indicated on the map, previous efficiency evaluations in a section including the current location are indicated together on the map. Because the section that includes the current location includes a road on which the vehicle travels immediately after the current location, the driver is able to recognize previous efficiency evaluations after the current location and, further, drive while contrasting them with current efficiency evaluations before the current location.

When the vehicle is travelling from a departure place toward a destination, previous efficiency evaluations in previous travel of which the departure place and the destination are the same as those of current travel may be acquired. That is, when the departure place and the destination are the same between current travel and previous travel, current efficiency evaluations and previous efficiency evaluations are indicated. With this configuration, when the vehicle travels from a departure place toward a destination, it is possible to provide a guideline for suppressing the total fuel efficiency as compared with previous travel.

Other than a value obtained by dividing a value, obtained by subtracting the number of evaluation-deteriorated unit sections from the number of evaluation-improved unit sections, by the number of previously-unachieved unit sections, various definitions may be employed as the definition of the degree of improvement. For example, the degree of improvement is defined such that the degree of improvement increases as the number of unit sections in which a target is not achieved in previous travel and the target is achieved in current travel increases, and the number of unit sections in which the target is achieved in the previous travel and the target is not achieved in the current travel may not be considered. That is, only improvement of the driving skill may be evaluated it is assumption the assumption that the driving skill is less likely to get worse with time, and. With this configuration, it is possible to easily determine the degree of improvement to which current efficiency evaluations are improved with respect to previous efficiency evaluations. In addition, the degree of improvement may be defined by normalizing the number of unit sections as described above or the degree of improvement may be determined on the basis of the number of unit sections that are not normalized. Furthermore, the denominator for normalization is not limited to the above-described example. The denominator may be, for example, the number of unit sections in which a target is not achieved in current travel.

Other than the above-described configuration, various configurations may be employed as the configuration for determining the degree of improvement of current efficiency evaluations with respect to previous efficiency evaluations. For example, it may be determined that the degree of improvement increases as the degree of deviation, to which driving efficiencies deviate from a target in the previous travel, in unit sections in which the target is not achieved in the previous travel and the target is achieved in current travel, increases. Previous efficiency evaluations and current efficiency evaluations are results of comparison between driving efficiencies and the target. Therefore, when a current efficiency evaluation of any one of unit sections indicates that a target is achieved, a driving efficiency of the one of the unit sections in current travel at least exceeds the target. Thus, when a previous efficiency evaluation of the one of the unit sections indicates that the target is not achieved, a driving efficiency of the one of unit section in current travel is improved more than a degree corresponding to the degree of deviation to which a driving efficiency deviates from the target in the previous travel. Thus, a degree to which a current efficiency evaluation is improved as compared with a previous efficiency evaluation increases as the degree of deviation, to which a driving efficiency deviates from a target in previous travel, in any one of unit sections in which the target is not achieved in the previous travel and the target is achieved in current travel increases.

For example, FIG. 5D shows previous efficiency evaluations in previous travel having the same departure place and destination as those of the example shown in FIG. 5B. FIG. 5E shows current efficiency evaluations in current travel having the same departure place and destination as those of the example shown in FIG. 5C. In addition, the previous efficiency evaluations in FIG. 5D are the same as the previous efficiency evaluations in FIG. 5B, and the current efficiency evaluations in FIG. 5E are the same as the current efficiency evaluations in FIG. 5C. In these examples, it is assumed that the current and previous targets are that the turn-on rate of the lamp 40a is 50% (that is, the predetermined threshold is 50%). Because evaluations in unit sections Z1 to Z3 shown in FIG. 5D and FIG. 5E are improved, the turn-on rate of the lamp 40a when the vehicle has currently travelled in these unit sections Z1 to Z3 exceeds the threshold 50% as the target. Thus, in these examples, a driving efficiency in each of the unit sections Z1 to Z3 is improved more than a degree corresponding to the degree of deviation to which the turn-on rate of the lamp 40a deviates from the target in the previous travel. Then, as the degree of deviation between the turn-on rate of the lamp 40a and the target in the previous travel in each of the unit sections Z1 to Z3 increases, a degree to which the driving efficiency is improved in a corresponding one of the unit sections Z1 to Z3 in current travel increases.

Thus, the degree of improvement is defined such that the degree of improvement increases as the degree of deviation, to which a driving efficiency deviates from the target in previous travel, in any one of unit sections in which the target is not achieved in the previous travel and the target is achieved in current travel increases. With this configuration, it is possible to easily define the degree of improvement of current efficiency evaluations with respect to previous efficiency evaluations. Various definitions may be employed as a specific definition of the degree of improvement. For example, the degree of deviation may be defined using the ratio between a predetermined threshold as a target and the turn-on rate of the lamp 40a. In this case, the degree of improvement may be defined using a value obtained by normalizing a difference value that is obtained by subtracting the degree of deviation in current travel for an evaluation-deteriorated unit section from the degree of deviation in previous travel for an evaluation-improved unit section. Note that, when there are a plurality of evaluation-improved unit sections or a plurality of evaluation-deteriorated unit sections, the degree of improvement may be defined on the basis of the sum of the degrees of deviation of the respective unit sections.

FIG. 5D and FIG. 5E show examples in the case where the degree of deviation is represented in five levels. The control unit 20 consults a previous efficiency evaluation for an evaluation-improved unit section, and determines the ratio between the predetermined threshold and the turn-on rate of the lamp 40a. For example, in the case where the predetermined threshold corresponds to the turn-on rate of 50%, when the turn-on rate of the lamp is 40%, the ratio is 80% (40/50). The ratio indicates that the deviation between a target and a driving efficiency increases as the ratio reduces. Then, the control unit 20 determines the degree of deviation corresponding to the ratio on the basis of the following Table 2.

**Table 2**

| | | | | | |
|---|---|---|---|---|---|
| Ratio | 0 to 20% | 21 to 40% | 41 to 60% | 61 to 80% | 81 to 100% |
| Degree of Deviation | 5 | 4 | 3 | 2 | 1 |

FIG. 5D and FIG. 5E show the degrees of deviation in circles shown above the previous efficiency evaluations and the current efficiency evaluations of the respective unit sections. In the examples shown in FIG. 5D and FIG. 5E, the unit sections Z1 to Z3 are the evaluation-improved unit sections. The degree of deviation in previous travel for each of the unit sections Z1 to Z3 is 1. Thus, the control unit 20 acquires the sum of the degrees of deviation (1 + 1 + 1 = 3) for the respective unit sections Z1 to Z3, and determines the acquired sum of the degrees of deviation as the degree of deviation in previous travel for the evaluation-improved unit sections. Note that, in the examples shown in FIG. 5D and FIG. 5E, there is no evaluation-deteriorated unit section, so the degree of deviation in current travel for evaluation-deteriorated unit sections is 0.

Then, the control unit 20 subtracts the degree of deviation in current travel for evaluation-deteriorated unit sections from the degree of deviation in previous travel for evaluation-improved unit sections, and acquires the degree of improvement by dividing the difference value by the degree of deviation of a unit section in which the target is not achieved in previous travel. For example, in the examples shown in FIG. 5D and FIG. 5E, the control unit 20 determines the degree of improvement as 15% (3/20) using a value 3 (3 - 0), obtained by subtracting the degree of deviation in current travel for evaluation-deteriorated unit sections from the degree of deviation in previous travel for evaluation-improved unit sections, and a value 20 (1 + 1 + 1 + 5 + 3 + 4 + 2 + 3) representing the degree of deviation in unit sections in which a target is not achieved in the previous travel. When the degree of improvement is determined, the control unit 20 determines the correction amount on the basis of a predetermined correspondence relationship between a degree of improvement and a correction amount (for example, the correspondence relationship shown in Table 1), and then corrects the predetermined threshold as the target.

In the above-described configuration, the degree of deviation from a target in each unit section in previous travel or current travel is a numeric value corresponding to the degree of variation in driving skill. For example, although a target is not achieved and the degree of deviation is large in previous travel, when the target is achieved in current travel, it is considered that the driver's skill is significantly improved. On the other hand, although a target is not achieved and the degree of deviation is large in current travel, when the target has been achieved in previous travel, it is considered that the driver's skill is significantly deteriorated. Thus, as in the case of the above configuration, by defining the degree of improvement such that the degree of improvement increases as a value obtained by subtracting the degree of deviation in current travel for each evaluation-deteriorated unit section from the degree of deviation in previous travel for each evaluation-improved unit section increases, it is possible to correct a target on the basis of a variation in driver's driving skill.

In the above configuration, when the degree of deviation in current travel for each evaluation-deteriorated unit section is constant, the degree of improvement increases as the degree of deviation in previous travel for each evaluation-improved unit section increases. Thus, in the above configuration, in a unit section in which a target is not achieved in previous travel and the target is achieved in current travel, it is assumed that the degree of improvement increases as the degree of deviation, to which a driving efficiency deviates from the target in previous travel, increases.

The above-described definition of the degree of improvement is illustrative, and other various definitions may also be employed. For example, the degree of improvement is determined on the basis of the degree of deviation in previous travel in a unit section in which a target is not achieved in the previous travel and the target is achieved in current travel, and the degree of deviation in current travel in a unit section in which the target is achieved in the previous travel and the target is not achieved in the current travel may not be considered. That is, only improvement of the driving skill may be evaluated on the assumption that the driving skill is less likely to get worse with time. In addition, the degree of deviation may be normalized as described above or the degree of improvement may be determined on the basis of the degree of deviation that is not normalized. Furthermore, the degree of improvement may be determined on the basis of, for example, the difference value between the degree of deviation from a target in previous travel and the degree of deviation from a target in current travel. Furthermore, the denominator for normalization is not limited to the above-described example. The denominator may be, for example, the degree of deviation of a unit section in which a target is not achieved in current travel.

Instead of the above-described degree of deviation, the degree of difficulty in improving a driving efficiency may be considered. The shape and property of a road, a condition of an object around the road, a traffic congestion situation on the road, or the like, can vary among unit sections, so the degree of difficulty in achieving a target can vary among the unit sections. As the degree of difficulty increases, the driving skill of a driver who has achieved a target is higher. Thus, in a unit section in which a target is not achieved in previous travel and the target is achieved in current travel, the degree of improvement increases as the degree of difficulty in improving a driving efficiency increases. By so doing, it is possible to use the degree of improvement as an index for correcting the target in order to improve the driving skill. In this case, for example, the degree of difficulty of each unit section may be defined.

Various definitions may be employed as the definition of the degree of difficulty of each unit section. A rule for determining the degree of difficulty depending on the shape and property of a road, a condition of an object around the road, a traffic congestion situation on the road, or the like, of each unit section may be determined in advance. For example, a rule is determined in advance as follows. When the shape of a road is a rising slope, the degree of difficulty increases as the gradient of the rising slope increases. When the property of a road is a minor street, an ordinary road, or an expressway, the degree of difficulty increases in order of expressway, ordinary road and minor street. When the presence or absence of a traffic light is determined, as an object around a road, at an end point of a road, the degree of difficulty increases in the case where a traffic light is present as compared with the case where no traffic light is present. The degree of difficulty increases as the degree of traffic congestion increases in a unit section.

Then, the control unit 20 consults the map information 30a, acquires the shape and property of a road, a condition of an object around the road and a traffic congestion situation (for example, a statistical value that indicates the degree of traffic congestion) in each unit section, and determines the degree of difficulty of each unit section on the basis of the above-described rule. Here as well, the degree of improvement may be determined on the basis of only the degree of difficulty of each unit section in which a target is not achieved in previous travel and the target is achieved in current travel. Alternatively, the degree of improvement may be determined by also referring to the degrees of difficulty of the other unit sections. As for the former case, for example, it is applicable that a value that indicates the degree of difficulty of a unit section, in which a target is not achieved in previous travel and the target is achieved in current travel is determined, and then the degree of improvement is determined by the degree of difficulty or a value obtained by normalizing the degree of difficulty. As for the latter case, for example, it is applicable that the degree of improvement is determined by a value obtained by subtracting the degree of difficulty of a unit section, in which a target is achieved in previous travel and the target is not achieved in current travel, from the degree of difficulty of a unit section in which the target is not achieved in the previous travel and the target is achieved in the current travel, a value obtained by normalizing the above value, or the like.

The degree of improvement may be determined on the basis of the degree of achievement of a target in current travel and the degree of achievement of the target in previous travel. For example, the degree of improvement may be larger as a value obtained by subtracting the degree of achievement of a target in previous travel from the degree of achievement of the target in current travel increases. That is, various results of comparison between a driving efficiency and a target can be obtained. For example, the driving efficiency may be lower than the target, or the driving efficiency may be higher than the target. In addition, it may be assumed that a degree to which the driving efficiency is lower than the target or the driving efficiency is higher than the target can also vary. Then, the result of comparison between a driving efficiency and a target in previous or current travel may represent the degree of achievement. For example, the degree of achievement may be defined as the rate of an actual driving efficiency with respect to a target driving efficiency.

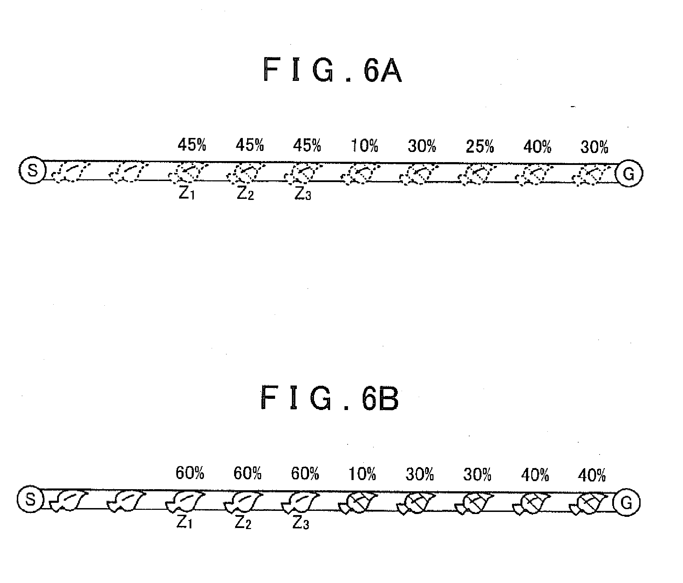

FIG. 6A and FIG. 6B are views that illustrate the degree of achievement in the case where the vehicle has travelled ten unit sections that constitute a route from a departure place S to a destination G. FIG. 6A shows an example in which eight unit sections are evaluated as "bad". FIG. 6B shows an example in which three unit sections among the eight unit sections that have been evaluated as "bad" in FIG. 6A are evaluated as "good". In addition, in FIG. 6A and FIG. 6B, actually measured turn-on rates of the lamp 40 are indicated by percentage above unit sections. In FIG. 6A and FIG. 6B, an evaluation of each unit section is indicated in the case where the predetermined threshold as the target is 50%.

For example, because the turn-on rate of the lamp 40a in previous travel in each of the unit sections Z1 to Z3 is 45% in FIG. 6A, a previous efficiency evaluation of each of the unit sections Z1 to Z3 is "bad". On the other hand, because of the turn-on rate of the lamp 40a in current travel in each of the unit sections Z1 to Z3 is 60% in FIG. 6B, a current efficiency evaluation of each of these unit sections Z1 to Z3 is "good". Furthermore, because the turn-on rate of the lamp 40a in previous travel in each of the unit sections Z1 to Z3 is 45%, the degree of achievement is determined as 90% (45/50) by dividing the turn-on rate is by the predetermined threshold (50%) as target. On the other hand, because the turn-on rate of the lamp 40a in current travel is 60%, the degree of achievement may be determined as 120% (60/50) by dividing the turn-on rate by the predetermined threshold.

When the degree of achievement is defined as described above, it is possible to directly compare a previous efficiency evaluation with a current efficiency evaluation. In addition, when a current efficiency evaluation is improved as compared with a previous efficiency evaluation, a difference value obtained by subtracting the degree of achievement of a target in previous travel from the degree of achievement of the target in the current travel may be regarded as the amount of improvement at the time of comparison between the previous efficiency evaluation and the current efficiency evaluation. Thus, the degree of improvement increases as the above difference value increases.

For example, for previously-unachieved unit sections in which a target is not achieved in previous travel (eight unit sections indicated by hatched icons in FIG. 6A), the degree of improvement may be determined on the basis of the difference value obtained by subtracting the degree of achievement in the previous travel from the degree of achievement in current travel, or a value obtained by normalizing the difference value using the predetermined threshold. In this case, the control unit 20 determines the previously-unachieved unit sections on the basis of previous efficiency evaluations. Then, the control unit 20 determines the degree of achievement in each of the previously-unachieved unit sections and averages those degrees of achievement. In the example shown in FIG. 6A, the averaged degree of achievement is 67.5% ((45/50 + 45/50 + 45/50 + 10/50 + 30/50 + 25/50 + 40/50 + 30/50) /8). On the other hand, the control unit 20 determines the degrees of achievement in the above-described eight previously-unachieved unit sections on the basis of current efficiency evaluations and then averages the degrees of achievement. In the example shown in FIG. 6B, the averaged degree of achievement is 82.5% ((60/50 + 60/50 + 60/50 + 10/50 + 30/50 + 30/50 + 40/50 + 40/50) /8). Then, the control unit 20 determines the degree of improvement 15%, which is the difference value obtained by subtracting the degree of achievement in the previous travel from the degree of achievement in the current travel.

The degree of improvement increases as the degree of achievement in current travel relative to the degree of achievement in previous travel increases as compared with that in previous travel. Therefore, the degree of improvement increases as the driver's driving skill improves. Thus, the control unit 20 determines the correction amount on the basis of a predetermined correspondence relationship between a degree of improvement and a correction amount (for example, a correspondence relationship shown in Table 3) and then corrects the predetermined threshold that is the target. With such a configuration as well, it is possible to correct a target on the basis of a driver's driving skill.

**Table 3**

| | | | | | |
|---|---|---|---|---|---|
| Degree of Improvement | ±1 to 25% | ±26 to 50% | ±51 to 75% | ±76 to 100% | ±100% Or More |
| Correction Amount | ±2% | ±4% | ±6% | ±8% | ±10% |

Note that, in this case as well, the degree of improvement may be determined on the basis of only a difference value obtained by subtracting the degree of achievement in previous travel from the degree of achievement in current travel for each unit section in which a target is not achieved in the previous travel and the target is achieved in the current travel. For example, it is applicable that, for each of the unit sections Z1 to Z3 in which a target is not achieved in previous travel and the target is achieved in current travel, a difference value obtained by subtracting the degree of achievement in the previous travel from the degree of achievement in the current travel is determined and then the degree of improvement is determined by the difference value or a value obtained by normalizing the difference value. It is also applicable that a given section is extracted from among unit sections for which current travel and previous travel are comparable and then the degree of achievement in the previous travel in the extracted unit section is acquired.

In the above configuration, the degree of improvement and the correction amount are defined so as to vary in a stepwise manner; instead, any one or both of the degree of improvement and the correction amount may vary continuously. For example, the degree of improvement and the correction amount may be defined such that the correction amount monotonically increases with respect to the degree of improvement. Various timings may be applied as a timing at which a corrected target is applied to an evaluation of driving efficiency. Even in the middle of current travel, a target may be corrected after an evaluation is improved and then a driving efficiency may be evaluated on the basis of the corrected target. In addition, a target may be corrected after current travel ends. That is, the corrected target may be applied at the time of the next travel. Note that, when a target in current travel is corrected, a target in previous travel may be corrected or may not be corrected.

A driving efficiency is acquired for each unit section, and is stored in a predetermined storage medium for reference. For example, it is only necessary that a driving efficiency is acquired each time the vehicle travels a section for which the driving efficiency is evaluated and then information (for example, travel date) for identifying travel information, to which the acquired driving efficiency is related, in the travel history is stored in the storage medium in association with the driving efficiency and the unit section. A current efficiency evaluation and a previous efficiency evaluation that are determined on the basis of a driving efficiency may be stored in the predetermined storage medium. A driving efficiency may be an index that indicates cost required for the vehicle to travel a unit distance and that increases as the cost reduces. The cost may be a price (a refueling unit price of liquid fuel or electric power), may be the amount of energy or may be a combination of them.

A target just needs to indicate a target driving efficiency to be achieved. The target may be a threshold of driving efficiency to be compared with a driving efficiency or may be a state where a driving efficiency can improve. As for the latter case, for example, in a hybrid vehicle, the state where a driving efficiency can improve may be defined as a state where the rate of usage of a driving source (for example, electric power), which is relatively cheap, is higher than or equal to a predetermined rate.

Travel of the vehicle just needs to be classified into previous travel and current travel in accordance with a predetermined rule. A previous efficiency evaluation in travel classified to previous travel and a current efficiency evaluation in travel classified to current travel just need to be compared. A current efficiency evaluation and a previous efficiency evaluation may be a result of comparison between a driving efficiency of the vehicle and a target, and may be an index that contributes to improvement of driving skill. For example, the current efficiency evaluation and the previous efficiency evaluation may be information that indicates a result of comparison between a fuel efficiency and a threshold, information that indicates a deviation between a fuel efficiency and a threshold, or the percentage of distance travelled in the EV drive mode in an evaluation section within a unit section. Furthermore, a target just needs to be corrected so that the target is increased when a current efficiency evaluation is improved as compared with a previous efficiency evaluation. For example, a target may be corrected by varying the target by a set amount. The correction amount of a target may be varied on the basis of the degree of improvement of current efficiency evaluations with respect to previous efficiency evaluations. In addition, a target may be corrected to a lower target. That is, a target may be corrected to a lower target when current efficiency evaluations are deteriorated as compared with previous efficiency evaluations.

As in the case of the evaluation indication system according to the above embodiment, a manner of correcting a target to a higher target when current efficiency evaluations are improved as compared with previous efficiency evaluations is applicable as a program or a method. In addition, the above-described system, program and method may be implemented as a sole device, may be implemented as a plurality of devices or may be implemented by utilizing a component shared with various portions provided for a vehicle, and are implemented in various forms. For example, it is possible to provide a navigation system, a navigation method and a program that are provided with the device as described above. In addition, an aspect of the invention may be modified where appropriate, for example, part of the aspect of the invention is implemented as software and part of the aspect of the invention is implemented as hardware. Furthermore, the aspect of the invention may include a storage medium that stores a program for controlling the system. The storage medium may be a magnetic storage medium, may be a magnetooptical storage medium or may be any storage media that will be developed in the future.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An evaluation indication system comprising:
a map display control unit (21a) adapted to display a current location of a vehicle and a map around the current location on a display unit;
a current efficiency evaluation acquisition unit (21b) adapted to acquire, as a current efficiency evaluation, a result of comparison between a driving efficiency of a unit section in current travel of the vehicle and a target; and
a previous efficiency evaluation acquisition unit (21c) adapted to acquire, as a previous efficiency evaluation, a result of comparison between a driving efficiency of the unit section in previous travel previous to the current travel and a target, wherein:
the map display control unit (21a) indicates the current efficiency evaluation and previous efficiency evaluation together on the map; and
when the current efficiency evaluation is improved as compared with the previous efficiency evaluation, the current efficiency evaluation acquisition unit (21b) corrects the target to a higher target.

2. The system according to claim 1, wherein the current efficiency evaluation acquisition unit (21b) sets the corrected target as the target in next travel of the vehicle.

3. The system according to claim 1 or 2, wherein, when the current efficiency evaluation is improved as compared with the previous efficiency evaluation, the current efficiency evaluation acquisition unit (21b) corrects the target such that the target becomes a higher target as a degree of improvement, to which the current efficiency evaluation is improved with respect to the previous efficiency evaluation, increases.

4. The system according to claim 3, wherein, the current efficiency evaluation acquisition unit (21b) determines that the degree of improvement is larger as the number of the unit sections in which the target is not achieved in the previous travel and the target is achieved in the current travel increases.

5. The system according to claim 3 or 4, wherein the current efficiency evaluation acquisition unit (21b) acquires a degree of deviation, to which the driving efficiency deviates from the target in the previous travel, in the unit section in which the target is not achieved in the previous travel and the target is achieved in the current travel, and determines that the degree of improvement is larger as the degree of deviation increases.

6. The system according to any one of claims 3 to 5, wherein the current efficiency evaluation acquisition unit (21b) acquires a degree of difficulty in improving the driving efficiency in the unit section in which the target is not achieved in the previous travel and the target is achieved in the current travel, and determines that the degree of improvement is larger as the degree of difficulty increases.

7. The system according to claim 3, wherein the current efficiency evaluation acquisition unit (21b) acquires a variation in degree of achievement, obtained by subtracting a degree of achievement of the target in the previous travel from a degree of achievement of the target in the current travel, and determines that the degree of improvement is larger as the variation in degree of achievement increases.

8. The system according to claim 7, wherein the current efficiency evaluation acquisition unit (21b) acquires the variation in degree of achievement for the unit section in which the target is not achieved in the previous travel.

9. The system according to claim 1, wherein when the current efficiency evaluation is deteriorated as compared with the previous efficiency evaluation, the current efficiency evaluation acquisition unit corrects the target to a lower target.

10. An evaluation indication method comprising:
displaying a current location of a vehicle and a map around the current location on a display unit;
acquiring, as a current efficiency evaluation, a result of comparison between a driving efficiency of a unit section in current travel of the vehicle and a target;
acquiring, as a previous efficiency evaluation, a result of comparison between a driving efficiency of the unit section in previous travel previous to the current travel and a target;
indicating the current efficiency evaluation and previous efficiency evaluation together on the map; and
when the current efficiency evaluation is improved as compared with the previous efficiency evaluation, correcting the target to a higher target.

11. A non-transitory computer-readable storage medium that stores computer-executable instructions for performing an evaluation indication function comprising:
displaying a current location of a vehicle and a map around the current location on a display unit;
acquiring, as a current efficiency evaluation, a result of comparison between a driving efficiency of a unit section in current travel of the vehicle and a target;
acquiring, as a previous efficiency evaluation, a result of comparison between a driving efficiency of the unit section in previous travel previous to the current travel and a target;
indicating the current efficiency evaluation and previous efficiency evaluation together on the map; and
when the current efficiency evaluation is improved as compared with the previous efficiency evaluation, correcting the target to a higher target.
